# FASCICULE DE BREVET EUROPEEN

(11) **EP 1 586 149 B1**
(45) Date de publication et mention de la délivrance du brevet: **16.08.2006**
(21) Numéro de dépôt: 04703823.7
(22) Date de dépôt: 21.01.2004
(51) Int. Cl.: H02B 5/02, H02B 13/035

(54) **APPAREIL DE COUPURE DE COURANT POUR RESEAUX AERIENS**
LEISTUNGSSCHALTER FÜR OBERLEISTUNGSNETZ
OVERHEAD NETWORK DISCONNECTION DEVICE

(30) Priorité: 23.01.2003 FR 0300701
(43) Date de publication de la demande: 19.10.2005
(73) Titulaire: Areva T & D SA, 92309 Levallois-Perret Cedex (FR)
(72) Inventeur: TEISSIER, Bernard, F-34130 MAUGUIO (FR); LEROY, Pierre, F-34670 BAILLARGUES (FR)
(74) Mandataire: Poulin, Gérard
(86) Numéro de dépôt international: PCT/FR2004/050019
(87) Numéro de publication internationale: WO 2004/068663

(56) Documents cités:
- EP-A- 0 369 280
- DE-A- 10 014 680

## Description

La présente invention concerne les appareils triphasés, à coupure enfermée tel que des interrupteurs, des sectionneurs ou des disjoncteurs à ré-enclenchement installés sur les poteaux des réseaux électriques aériens de moyenne et haute tension.

Ces appareils servent à permettre l'enclenchement ou la coupure du courant si nécessaire.

L'appareillage de moyenne ou haute tension s'installe sur un support qui se fixe sur tout types de poteaux: bois, béton, métallique, treillis. Il s'installe aussi bien en position horizontale qu'en position verticale. Il se manoeuvre manuellement par exemple par perche ou par un ensemble tringle plastron et éventuellement électriquement soit localement soit à distance via un système de téléconduite.

Le caisson ou boîtier renfermant la partie active est étanche et de préférence scellée à vie. Le caisson peut être en matériau conducteur comme l'acier inoxydable ou en matériau isolant synthétique. Ce caisson renferme une coupure triphasée comportant un ou, de préférence, à deux contacts de rupture par phase. Il renferme aussi un arbre actionnant les contacts mobiles qui par rotation ou translation assure la continuité et l'interruption de la ligne. En position ouverte, la position des contacts est telle que l'appareillage garanti le sectionnement de la ligne. Le caisson est équipé de traversées isolantes gérant la tenue diélectrique en partie externe au caisson. Ces traversées peuvent être parties intégrante ou non du caisson. L'extrémité extérieure est équipée des plages de raccordement assurant la liaison électrique de l'appareillage à la ligne. L'autre extrémité se trouve à l'intérieur du caisson et supporte le contact fixe ou l'articulation au couteau mobile en cas de coupure non double. Ce contact peut être raccordé par vis ou tout autre moyen mécanique sur l'extrémité de la traversée ou être partie intégrante du conducteur de la traversée. Dans ce cas il peut être obtenu par une opération mécanique telle que le formage à froid.

Pour réaliser ces coupures de courant et éviter les amorçages diélectriques à l'intérieur du caisson, il est nécessaire de prévoir une distance minimum entre les différentes phases. Généralement ces appareils de coupure enfermés utilisent un environnement isolant de meilleure qualité que l'air ambiant, comme le gaz SF6 ou des isolants synthétiques qui permettent de réduire l'encombrement et en particulier la distance entre les phases par rapport aux distances qui restent nécessaires à l'extérieur du caisson.

Les traversées, situées d'un même coté de la coupure sont positionnées de façon à ce que leurs extrémités extérieures, équipées des plages de raccordement soient espacées de telle façon que les distances d'isolement dans l'air soient respectées.

Les extrémités intérieures, bénéficiant d'un milieu diélectrique plus performant, peuvent être positionnées à des distances beaucoup plus faibles les unes des autres, afin d'obtenir un appareil compact. Il se pose alors le choix de la disposition relative de ces traversées sur le caisson.

Afin de résoudre ce problème, on connaît des configurations où les trois traversées de chaque phase convergent vers le centre du caisson et où l'entrée et la sortie sont situées du même coté dudit caisson. Il existe aussi des configurations où les traversées convergent vers l'intérieur du caisson, l'entrée et la sortie étant situées de façon symétrique de part et d'autre du caisson. Mais ces solutions restent encombrantes.

On connaît également des configurations où l'extrémité des traversées extérieures sont coudées, c'est à dire que la distance nécessaire entre les plages de raccordement en ligne est obtenue en coudant ces traversées de façon à ce que les fixations au niveau du caisson soient parallèles mais que les plages de connexion soient éloignées les unes des autres grâce à ces coudes. Cependant cette solution est onéreuse car elle nécessite des traversées coudées plus complexes à réaliser donc plus chères.

Il existe aussi des traversées réparties en hélice sur un cylindre, mais cette solution entraîne des pièces de raccordement des contacts fixes supplémentaires dans la coupure enfermée ou un arbre support des contacts mobiles plus complexe.

L'objet de l'invention est de proposer une solution à la fois simple et peu encombrante, à la fois au niveau des arbres et des contacts mobiles que des contacts fixes ou le caisson.

L'appareil de coupure selon l'invention est un appareil triphasé de coupure enfermé comprenant un caisson, trois traversées disposées d'un même coté par rapport à la coupure, chaque traversée ayant une extrémité extérieure et une extrémité intérieure, et il est caractérisé en ce que les deux traversées latérales sont disposées dans un plan parallèle à l'axe du caisson et la troisième traversée centrale est disposée dans un second plan parallèle à l'axe du caisson et faisant un angle avec le premier plan. Les trois traversées situées du même coté par rapport à la coupure sont placées sur deux plans différents, les deux traversées latérales sont situées sur un premier plan tandis que la troisième, médiane, est situé sur le deuxième plan. Les deux plans sont suffisamment inclinés l'un par rapport à l'autre pour que les extrémités extérieures des traversées soient à une distance garantissant la tenue diélectrique dans l'air et que les extrémités intérieures soient à une distance garantissant la tenue diélectrique dans le milieu diélectrique régnant dans le caisson.

Selon une caractéristique particulière, les extrémités intérieures entrée et sortie, desdites traversées sont alignées dans un même plan. La configuration particulière des traversées sur le caisson fait que les trois extrémités intérieures en entrée et en sortie qui font office de contact fixe, sont alignées de chaque coté. Les six contacts constitués des ensembles de trois contacts forment ainsi un même plan.

Selon une autre caractéristique de l'invention, les deux traversées coplanaires sont parallèles entre elles.

Selon une autre caractéristique de l'invention, le caisson comporte au moins deux surfaces planes sur lesquelles sont fixées les traversées. La fixation sur des surfaces planes est plus aisée.

Selon une autre caractéristique particulière, les surfaces planes sont situées de part et d'autre dudit caisson de façon symétrique. L'entrée et la sortie sont réalisées de la façon identique par symétrie.

Selon une autre caractéristique, les traversées se montent depuis l'intérieur, ce qui permet pour une meilleure tenue mécanique, une meilleure tenue aux fuites de gaz et de tenue à l'arc interne. En effet, le caisson pouvant contenir un gaz sous pression, la forme des traversées est telle qu'il existe un rebord qui prend appui à l'intérieur du caisson et qui assure ainsi une bonne étanchéité de l'appareil.

Selon une autre caractéristique, les traversées sont identiques. Ainsi les traversées ou les contacts rapportés sur l'extrémité de la traversée peuvent être orientés de telle façon à pouvoir utiliser la même traversée et le même contact quelle que soit la position de la traversée ou du contact dans le caisson, leur réalisation est identique.

L'invention sera mieux comprise à la lecture de la description qui va suivre donnée uniquement à titre d'exemple et faite en se référant aux dessins annexés dans lesquels:
- la figure 1 est une vue en élévation d'un appareil de coupure selon l'invention disposé horizontalement,
- la figure 2 est une vue en élévation d'un appareil de coupure selon l'invention disposé verticalement,
- la figure 3 est une vue en perspective d'un appareil de coupure selon l'invention en perspective,
- la figure 4 est une vue en coupe de l'appareil de coupure en position ouverte,
- la figure 5 est une vue en coupe de l'appareil de coupure en position fermée.

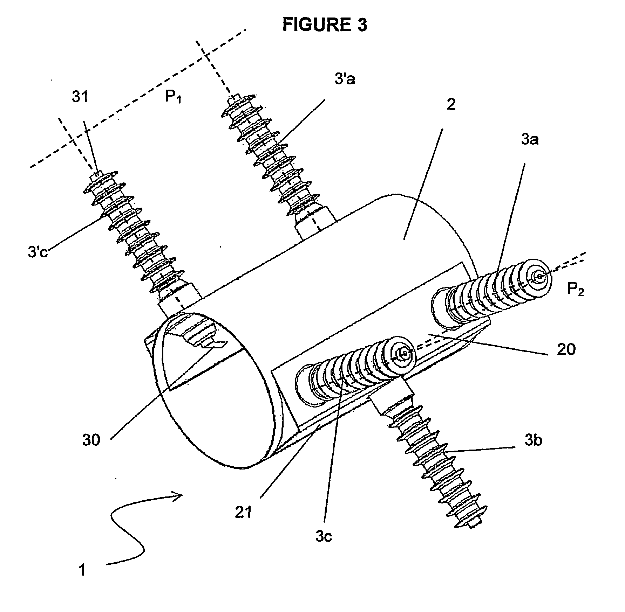

Comme on le voit à la figure 3, l'appareil de coupure 1 comprend un caisson 2 et des traversées isolantes 3 qui assurent la tenue diélectrique en partie externe du caisson. Les traversées 3 sont au nombre de trois en entrée et trois en sortie pour un réseau électrique triphasé. Elles peuvent faire partie intégrante du caisson ou non.

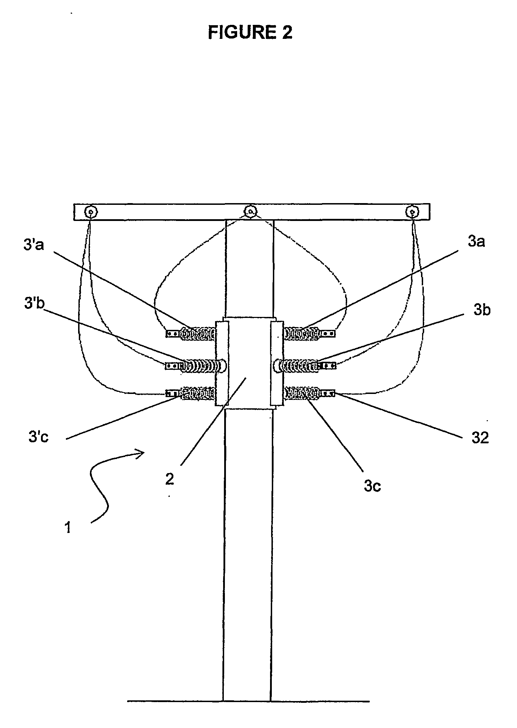

L'extrémité extérieure 31 des traversées 3 est équipée de plages de raccordement 32 assurant la liaison électrique de l'appareil à la ligne (cf. figure 2).

Chaque traversée 3 de l'entrée est disposée sur une des deux surfaces planes 20 ou 21 du caisson 2. Les deux traversées 3a et 3c sont placées dans le même plan 20 tandis que la troisième 3b est située dans le deuxième plan 21 (cf. figure 3).

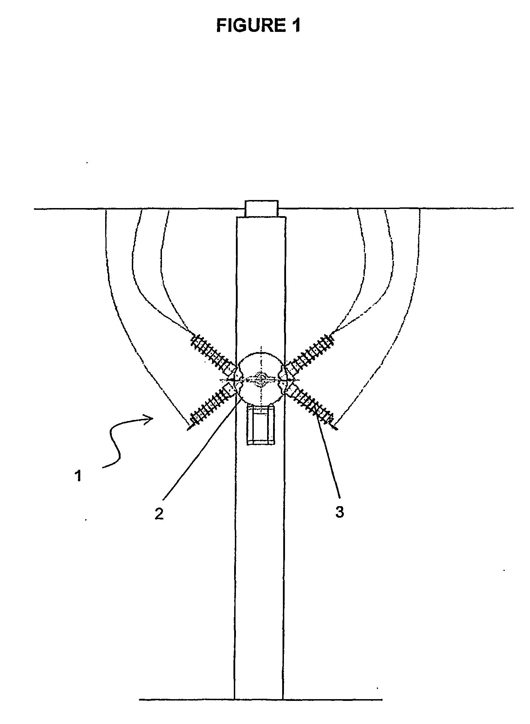

Comme montré aux figures 1 et 2, l'ensemble présente un plan de symétrie entre l'entrée et la sortie, ainsi chacune des traversées 3'a, 3'b, 3'c de la sortie sont disposées en vis à vis de la traversée d'entrée 3a, 3b, 3c correspondante.

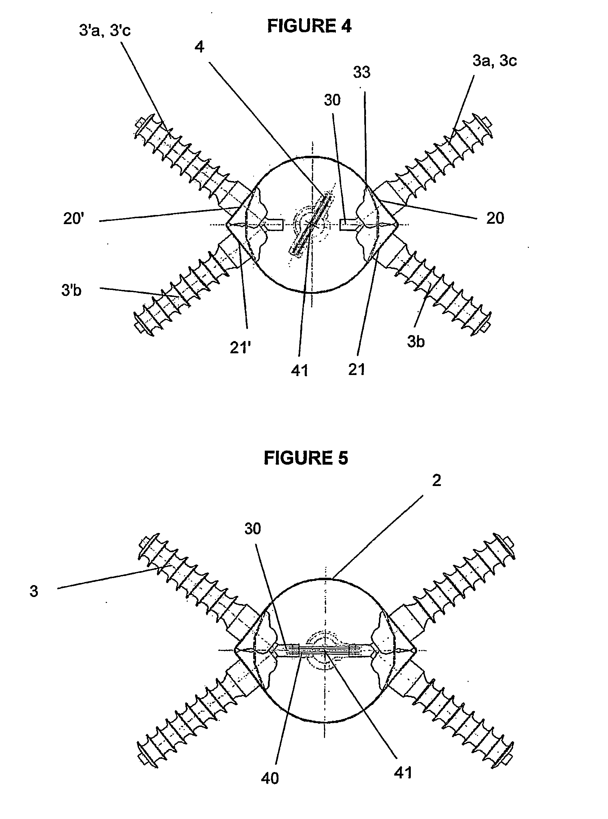

Les traversées de sortie 3'a, 3'b, 3'c sont placées sur deux plans 20' et 21' (cf. figure 4 et 5).

Sur les différentes figures, l'angle entre les deux plans 20-21 et 20'-21' est de 90°.

L'extrémité intérieure de chaque traversée 3 se trouve à l'intérieur du caisson 2 et supporte un contact fixe 30, en cas de coupure double, ou une articulation d'un couteau mobile en cas de coupure non double (non représenté). Les contacts fixes 30 peuvent être raccordés par des vis ou tout autre moyen de fixation connu ou encore faire partie intégrante du conducteur de ladite traversée 3 par une opération de formage à froid.

Les axes des contacts fixes 3 (entrée ou sortie) sont alignés sur la droite construite à partie des deux contacts fixes 30 disposés à l'extrémité des traversées 3a et 3c (ou 3'a et 3'c) qui sont coplanaires. Les deux droites ainsi construites sont également coplanaires.

Un dispositif de coupure 4 (cf. figure 4 et 5) est placé à l'intérieur du caisson 2. Ce dispositif est constitué d'un ou plusieurs contacts mobiles 40 supportés par un arbre 41.

Cet arbre 41 se déplace soit en translation soit en rotation afin d'assurer la continuité ou la coupure de la ligne.

En position ouverte, la position des contacts 40 est telle que l'appareil de coupure 1 garantit le sectionnement de la ligne.

Comme représenté aux figures 1 et 2, l'appareil peut être disposé horizontalement (figure 1) ou verticalement (figure 2).

On peut voir sur les différentes figures que les traversées 3 sont toutes identiques quelle que soit leur position sur le caisson 2.

Le montage des traversées 3 est faite de l'intérieur du caisson 2. La traversée est emboîtée dans un orifice prévu à cet effet (non représenté) dans le caisson 2 et le rebord 33 prend appui sur l'intérieur du caisson 2 (figure 4) .

Pour mieux définir la position de la troisième traversée 3b qui est centrale et en se référant à la figure 3, on précise que son axe longitudinal fait un angle avec le premier plan P₁, P₂ contenant les première et deuxième traversées 3a, 3b qui sont latérales.

## Revendications

1. Appareil triphasé de coupure (1) enfermé comprenant un caisson (2) définissant un axe, trois traversées d'entrée (3, 3a, 3b, 3c) et de sortie (3, 3a', 3b', 3c'), dont deux latérales (3a, 3c, 3a', 3c') d'entrée et deux latérales de sortie, disposées d'un même côté par rapport à la coupure, chaque traversée (3) ayant une extrémité extérieure (31) et une extrémité intérieure (30) **caractérisé en ce que** pour l'entrée et la sortie 0, les deux traversées latérales (3a, 3c, 3a', 3c') sont disposées dans un plan (P₁, P₂) parallèle à l'axe du caisson (2) et la troisième traversée centrale (3b, 3b') est disposée dans un second plan parallèle à l'axe du caisson (2), son axe longitudinal faisant un angle avec le premier plan, de sorte que les extrémités extérieures des traversées soient à une distance garantissant la tenue diélectrique dans l'air et les extrémités intérieurs à une distance garantissant la tenue diélectrique dans le milieu du caisson.

2. Appareil selon la revendication 1 **caractérisé en ce que** les extrêmités intérieures (30) desdites traversées (3), entrée et sortie, sont alignées dans un même plan.

3. Appareil selon la revendication 1 ou 2 **caractérisé en ce que** les deux traversées (3) coplanaires sont parallèles entre elles.

4. Appareil selon la revendication 1 ou 2 **caractérisé en ce que** le caisson (2) comporte au moins deux surfaces planes (20, 21; 20', 21') sur lesquelles sont disposés les traversées (3).

5. Appareil selon la revendication 3 **caractérisé en ce que** les surfaces planes (20, 21; 20', 21') sont situés de part et d'autre dudit caisson (2) de façon symétrique.

6. Appareil selon une des revendications précédentes **caractérisé en ce que** les traversées (3) se montent depuis l'intérieur.

7. Appareil selon une des revendications précédentes **caractérisé en ce que** les traversées (3) sont identiques.

## Claims

1. Enclosed three-phase, cut-off device (1) comprising a box (2) defining an axis, three input (3, 3a, 3b, 3c) and output (3, 3a', 3b' 3c') bushings, whereof two lateral input and two lateral output bushings (3a, 3c, 3a', 3c') are located on the same side with respect to the cut-off, each bushing (3) having an external end (31) and an internal end (30), **characterized, in that** for the input and output the two lateral bushings (3a, 3c, 3a', 3c') are located in a plane (P1, P2) parallel to the axis of the box (2) and the third central bushing (3b, 3b') is located in a second plane parallel to the axis of the box (2), its longitudinal axis forming an angle with the first plane, so that the external ends of the bushings are at a distance guaranteeing the dielectric strength in air and the internal ends are at a distance guaranteeing the dielectric strength in the medium of the box.

2. Device according to claim 1, **characterized in that** the internal ends (30) of said bushings (30), the input and output, are aligned in a same plane.

3. Device according to claim 1 or 2, **characterized in that** both coplanar bushings (3) are parallel to each other.

4. Device according to claim 1 or 2, **characterized in that** the box (2) includes at least two planar surfaces (20, 21; 20', 21') on which the bushings (3) are positioned.

5. Device according to claim 3, **characterized in that** the planar surfaces (20, 21; 20', 21') are located on either side of said box (2) symmetrically.

6. Device according to any of the preceding claims, **characterized in that** the bushings (3) are mounted from the inside.

7. Device according to any of the preceding claims, **characterized in that** the bushings (3) are identical.

## Patentansprüche

1. Geschlossener Dreiphasenleistungsschalter (1) mit einem Gehäuse (2), das eine Achse, drei Eingangsdurchführungen (3, 3a, 3b, 3c) und drei Ausgangsdurchfährungen (3, 3a', 3b', 3c') definiert, darunter zwei seitliche Eingangsdurchführungen (3a, 3c, 3a', 3c') und zwei seitliche Ausgangsdurchführungen, die auf einer gleichen Seite bezüglich der Unterbrechung angeordnet sind, wobei jede Durchführung (3) ein äußeres Ende (31) und ein inneres Ende (30) aufweist, **dadurch gekennzeichnet, dass** bei dem Eingang und Ausgang die beiden seitlichen Durchführungen (3a, 3c, 3a', 3c') in einer parallel zur Achse des Gehäuses (2) verlaufenden Ebene (p₁, p2) angeordnet sind und die dritte, mittlere Durchführung (3b, 3b') in einer parallel zur Achse des Gehäuses (2) verlaufenden zweiten Ebene angeordnet ist, wobei deren Längsachse mit der ersten Ebene einen Winkel einschließt, so dass die äußeren Enden der Durchführungen in einem Abstand liegen, der die dielektrische Freiluftfestigkeit gewährleistet, und die inneren Enden in einem Abstand liegen, der die dielektrische Freiluftfestigkeit im Bereich des Gehäuses gewährleistet.

2. Leistungsschalter nach Anspruch 1, **dadurch gekennzeichnet, dass** die inneren Enden (30) der Eingangs- und Ausgangsdurchführungen (3) in einer gleichen Ebene fluchten.

3. Leistungsschalter nach Anspruch 1 oder 2, **dadurch gekennzeichnet, dass** die beiden koplanaren Durchführungen (3) zueinander parallel verlaufen.

4. Leistungsschalter nach Anspruch 1 oder 2, **dadurch gekennzeichnet, dass** das Gehäuse (2) zumindest zwei ebene Flächen (20, 21; 20', 21') enthält, an denen die Durchführungen (3) angeordnet sind.

5. Leistungsschalter nach Anspruch 3, **dadurch gekennzeichnet, dass** die ebenen Flächen (20, 21; 20', 21') symmetrisch beiderseits des Gehäuses (2) liegen.

6. Leistungsschalter nach einem der vorangehenden Ansprüche, **dadurch gekennzeichnet, dass** die Durchführungen (3) von innen eingebracht werden.

7. Leistungsschalter nach einem der vorangehenden Ansprüche, **dadurch gekennzeichnet, dass** die Durchführungen (3) identisch sind.
